# FASCICULE DE BREVET EUROPEEN

(11) **EP 0 392 415 B1**
(45) Date de publication et mention de la délivrance du brevet: **12.10.1994**
(21) Numéro de dépôt: 90106744.7
(22) Date de dépôt: 09.04.1990
(51) Int. Cl.: H04Q 11/04, H04Q 3/545

(54) **Centre satellite numérique multiservice en technique temporelle asynchrone de raccordement d'abonnés**
Asynchrone digitale Zeitmultiplex-Teilnehmeranschluss-Satellitenanlage mit mehreren Diensten
Asynchronous digital time- multiplexed multi-service subscriber connection satellite centre

(30) Priorité: 13.04.1989 FR 8904907
(43) Date de publication de la demande: 17.10.1990
(73) Titulaire: ALCATEL CIT, 75008 Paris (FR)
(72) Inventeur: Jacob, Jean-Baptiste, F-22700 Perros- Guirec (FR)
(74) Mandataire: Weinmiller, Jürgen

(56) Documents cités:
- EP-A- 0 133 703
- EP-A- 0 260 676
- EP-A- 0 289 733
- US-A- 4 761 779
- COMPUTER NETWORKS AND ISDN SYSTEMS, vol. 11, no. 3, mars 1986, pages 219-241,Elsevier Science Publishers B.V. (North-Holland), Amsterdam, NL; A.K. ELHAKEEMet al.: "Analysis of a hybrid (demand assignment TDMA) protocol for videoteleconferencingvoice data optical networks"
- ELECTRONIC DESIGN, 24 juin 1982, pages 73-80,82, Rochelle Park, US; R. ALLAN:"PABXs equip themselves for the future office"

## Description

L'invention concerne le raccordement d'abonnés analogiques ou numériques sur ligne métallique, et le raccordement d'abonnés numériques sur fibre optique, qu'ils soient proches du centre de rattachement ou éloignés de celui-ci, et plus particulièrement un centre satellite numérique multiservice en technique temporelle asynchrone, de raccordement d'abonnés à un réseau de télécommunications.

On connait par le brevet européen 0133703 intitulé Centre Satellite Numérique de Raccordement d'abonnés, une unité de raccordement qui peut être locale ou distante. De plus, cette unité de raccordement permet le regroupement d'abonnés analogiques ou numériques sur des concentrateurs reliés à une unité de commande numérique par des lignes multiplex numériques, ces concentrateurs pouvant être locaux ou distants.

De telles unités de raccordement ne permettent que le raccordement d'abonnés sur ligne métallique, c'est-à-dire soit des abonnés analogiques, soit des abonnés numériques 144 kbit/s, à 2 canaux 64 kbit/s en mode circuit et un canal à 16 kbit/s en mode trame, ce que l'homme de l'art appelle lignes 2B + D RNIS bande étroite. De plus les lignes multiplex entre concentrateurs et unité de commande numérique d'une part et entre unité de raccordement numérique et centre de rattachement d'autre part acheminent toutes les informations : parole, données, signalisation, dans des multiplex synchrones, par exemple à 2,048 Mbit/s ayant des trames de 125 microsecondes à 32 voies.

Or les besoins des abonnés en nouveaux services, tels que par exemple les services vidéo et de données à très haut débit ne peuvent plus être satisfaits par les possibilités des lignes d'abonnés actuelles, tandis, que la fibre optique permet des débits numériques pouvant atteindre et même dépasser 600 Mbit/s.

La technique temporelle asynchrone, en abrégé TTA, permet le multiplexage et la commutation de tous les types d'informations (parole, image, son hi-fi, données de tous débits, signalisation,... etc) sous une forme unique appelée cellule, de longueur fixe comprenant par exemple une partie en-tête de 4 octets et une partie information de 32 octets. La normalisation relative à la TTA est en cours au CCITT. On trouvera des exemples de contenu de l'en-tête et des descriptions de la technique temporelle asynchrone dans la Recommandation I.121 du CCITT, paragraphes 3.,4.3, et suivants et des exemples de matrice de commutation temporelle asynchrone dans :
ISS 84 - Florence, 7-11 May 1984 - Session 32C, paper 2, Asynchronous Time-Division Techniques :
An experimental Packet Network Integrating Video-communications, de Thomas A, Coudreuse JP, et Servel M,
ISS 1987 - Phoenix, B5 pages 367 à 372 Switching Techniques for asynchronous time division multiplexing (or fast packet switching) de Dieudonné M et Quinquis M.

L'invention a pour but le raccordement de différents types d'abonnés tels qu'abonnés analogiques, numériques, sur lignes métalliques, abonnées numériques en technique temporelle asynchrone (TTA) sur ligne métallique et sur fibre optique, ainsi que le raccordement de sous-systèmes synchrones comme par exemple des centraux privés (PABX) à accès 2 Mbit/s, et des centres satellites numériques synchrones, par exemple du type décrit dans le brevet européen 0133703 déjà cité.

L'invention a pour objet un centre satellite numérique multiservice en technique temporelle asynchrone de raccordement d'abonnés analogiques et numériques, comportant une unité de commande numérique et des concentrateurs numériques d'au moins un des types suivants : local, éloigné, éloigné mixte, pour le raccordement des abonnés par des lignes métalliques, l'unité de commande étant reliée par des liaisons multiplex aux concentrateurs et à un central numérique de rattachement, caractérisé par le fait que lesdites liaisons multiplex sont des liaisons multiplex asynchrones acheminant des cellules, que les concentrateurs sont des concentrateurs multiservice délivrant sous forme de cellules des informations reçues des abonnés et transmettant aux abonnés des informations des cellules qu'ils reçoivent, et que l'unité de commande numérique est une unité de commande multiservice comprenant un réseau de connexion multiservice pour la commutation des cellules, relié aux concentrateurs multiservice et au central numérique de rattachement par lesdites liaisons multiplex asynchrones et une station de commande reliée au réseau de connexion multiservice par des liaisons multiplex asynchrones de commande acheminant des cellules.

L'invention va être décrite à l'aide d'un exemple de réalisation illustré par les figures annexées dans lesquelles :
- La figure 1 représente l'architecture générale d'un centre satellite numérique multiservice de l'invention,
- La figure 2 représente l'artichitecture générale d'un concentrateur multiservice de la figure 1, qu'il soit de type local, éloigné ou mixte,
- La figure 3 représente l'architecture générale de l'unité de commande multiservice de la figure 1.

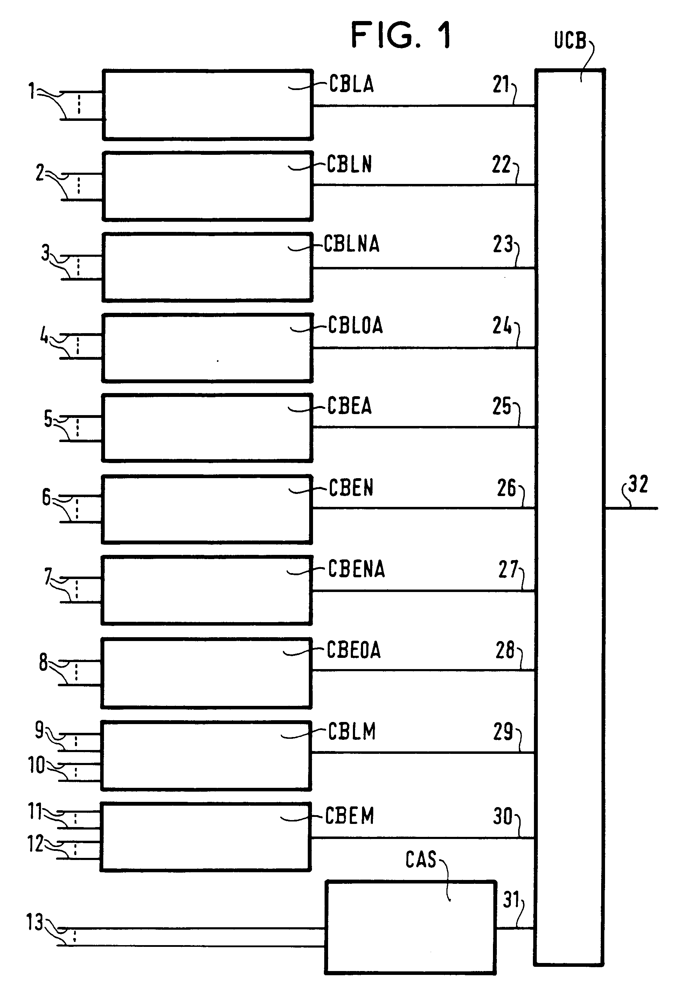

La figure 1 représente l'architecture générale d'un centre satellite numérique multiservice CSB de l'invention constitué d'une unité de commande multiservice UCB, et de concentrateurs multiservice d'au moins un des types suivants :
- de type local pour abonnés analogiques sur ligne métallique, CBLA, relié à des lignes 1,
- de type local pour abonnés numériques 2B + D sur ligne métallique, CBLN, relié à des lignes 2,
- de type local pour abonnés numériques TTA sur ligne métallique, CBLNA, relié à des lignes 3,
- de type local pour abonnés numériques TTA sur fibre optique, CBLOA, relié à des fibres optiques 4,
- de type éloigné pour abonnés analogiques, sur ligne métallique, CBEA, relié à des lignes 5,
- de type éloigné pour abonnés numériques 2B + D sur ligne métallique, CBEN, relié à des lignes 6,
- de type éloigné pour abonnés numériques TTA sur ligne métallique, CBENA, relié à des lignes 7,
- de type éloigné pour abonnés numériques TTA sur fibre optique, CBEOA, relié à des fibres optiques 8,
- de type local mixte pour abonnés analogiques, numériques 2B + D, numériques TTA, sur ligne métallique, et pour abonnés numériques TTA sur fibre optique, CBLM, relié à des lignes 9 et à des fibres optiques 10,
- de type éloigné mixte pour abonnés analogiques, numériques 2B + D, numériques TTA, sur ligne métallique, et pour abonnés numériques TTA sur fibre optique, CBEM, relié à des lignes 11 et à des fibres optiques 12,
- de type convertisseur synchrone-asynchrone et asynchrone-synchrone, CAS, relié à des lignes 13.

Chaque concentrateur est relié à l'unité de commande multiservice UCB par une liaison multiplex TTA constituée par au moins deux lignes multiplex bidirectionnelles ayant dans chaque sens un débit de 600 Mbit /s par exemple.

Les concentrateurs multiservice locaux sont situés dans le même local que l'unité de commande multiservice UCB. Les concentrateurs multiservice éloignés sont situés à des distances variables de l'unité de commande multiservice UCB. Les concentrateurs de type convertisseur sont soit locaux, soit éloignés. Bien entendu un centre satellite numérique multiservice CSB peut comporter les différents types de concentrateurs multiservice ou seulement certains d'entre eux.

Pour les concentrateurs de type local les lignes multiplex reliant chaque concentrateur à l'unité de commande multiservice UCB sont des lignes métalliques lorsque les concentrateurs sont situés à proximité immédiate de ladite unité de commande, et sont des fibres optiques lorsque les concentrateurs sont distants de ladite unité de commande.

Pour les concentrateurs de type éloigné les lignes multiplex reliant chaque concentrateur à l'unité de commande sont des fibres optiques.

Chaque ligne multiplex bidirectionnelle en fibres optiques comporte alors, à chaque extrémité deux composants optoélectriques assurant l'un la conversion optique électrique et l'autre la conversion électrique optique des signaux.

Un concentrateur multiservice local, CBLA, d'abonnés analogiques sur ligne métallique, raccorde des abonnés téléphoniques par des lignes d'abonnés 1, et est relié par une liaison multiplex 21 à l'unité de commande multiservice UCB.

Un concentrateur multiservice local, CBLN, d'abonnés numériques 2B + D sur ligne métallique, est relié à des lignes 2, à 144 kbit/s chacune, chaque ligne étant bidirectionnelle et reliée à une installation terminale chez l'abonné ; il est relié par une liaison multiplex 22 à l'unité de commande multiservice UCB.

Un concentrateur multiservice local, CBLNA, d'abonnés numériques TTA sur ligne métallique, raccorde des abonnés multiservice sur des lignes 3, chaque ligne étant reliée à une installation terminale chez l'abonné et transportant dans chaque sens des cellules d'informations dont le débit en ligne est de l'ordre de quelques Mbit/s, par exemple 2,048 Mbit/s, ou encore de l'ordre de la centaine de Kbit/s par exemple 160 Kbit/s.

Il est relié par une liaison multiplex 23 à l'unité de commande multiservice UCB.

Un concentrateur multiservice local, CBLOA, d'abonnés sur fibre optique raccorde des abonnés multiservice sur des lignes d'abonnés en fibre optique 4 transportant des cellules d'informations venant de, ou allant vers, l'installation terminale chez l'abonné. Le débit en ligne de chaque fibre optique peut être très élevé et prendre des valeurs telles que 34 Mbit/s, 150 Mbit/s, 600 Mbit/s. Ces valeurs sont données à titre indicatif et non limitatif. Il est relié par une liaison multiplex 24 à l'unité de commande multiservice UCB.

Les concentrateurs multiservice éloignés CBEA, CBEN, CBENA et CBEOA sont respectivement identiques aux concentrateurs multiservice CBLA, CBLN, CBNA et CBLOA, dont ils se distinguent uniquement par leur localisation éloignée par rapport à l'unité de commande multiservice UCB à laquelle ils sont reliés par des liaisons multiplex 25, 26, 27, 28, respectivement.

Un concentrateur multiservice local mixte, CBLM, est relié à des lignes métalliques 9 et à des fibres optiques 10, pour le raccordement d'abonnés analogiques sur ligne métallique, d'abonnés numériques 2B + D sur ligne métallique, d'abonnés numériques TTA sur ligne métallique et d'abonnés TTA sur fibre optique, les débits en ligne étant identiques à ceux indiqués pour les concentrateurs multiservice locaux CBLA, CBLN, CBLNA, et CBLOA. Il est relié par une liaison multiplex 29 à l'unité de commande multiservice UCB.

Un concentrateur multiservice éloigné mixte, CBEM, est identique au concentrateur multiservice local mixte CBLM, dont il se distingue uniquement par sa localisation éloignée par rapport à l'unité de commande multiservice UCB à laquelle il est relié par une liaison multiplex 30.

Un convertisseur synchrone-asynchrone et asynchrone-synchrone, CAS, est relié par des lignes 13 à des sous systèmes synchrones tels que centraux privés (PABX) et centres satellites numériques synchrones, le débit en ligne étant de 2,048 Mbit/s. Il est reliés par une liaison multiplex 31 à l'unité de commande multiservice UCB ; cette liaison est métallique lorsque le convertisseur est à proximité immédiate de l'unité de commande et en fibres optiques lorsqu'elle est distante de celle-ci ; dans ce dernier cas la liaison comporte à chaque extrémité des composants optoélectroniques pour assurer la conversion optique électrique et électrique optique des signaux. Le convertisseur lui-même ne fait pas partie de l'invention, et est de tout type connu ; on trouvera un exemple de convertisseur dans GLOBECOM 1985, New Orleans, p 791 à 794, Asynchronous Time-Division Networks : Terminal Synchronization for video and sounds signals, J. Y COCHENNEC, P. ADAM, T. HOUDOIN.

Ce problème de la conversion synchrone asynchrone et inverse fait l'objet du paragraphe 3.4.3 de la Recommandation I 121 du CCITT, déjà citée.

L'unité de commande multiservice est reliée par une liaison multiplex 32 en fibres optiques à un central de télécommunication multiservice.

Le débit de chacune des liaisons multiplex 21 à 32 est de par exemple 600 Mbit/s. Comme indiqué précédemment, les liaisons multiplex 21 à 24, 29 et 31 sont métalliques ou en fibres optiques selon que les concentrateurs locaux sont ou non à proximité immédiate de l'unité de commande multiservice ; les liaisons multiplex 25 à 28, 30 et 32 sont en fibres optiques.

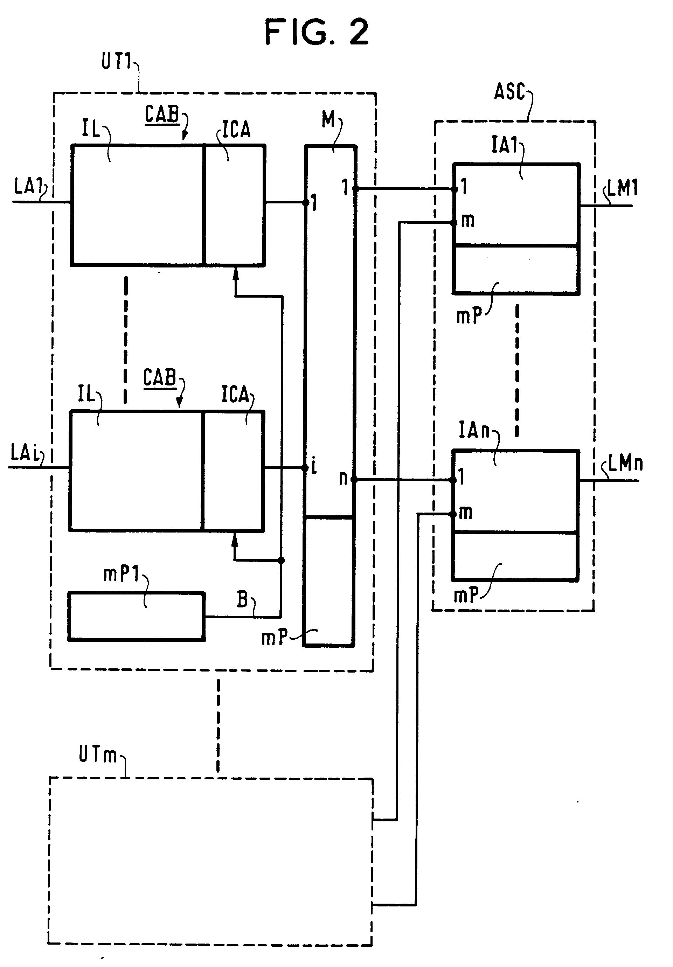

La figure 2 représente l'architecture générale d'un concentrateur multiservice de la figure 1, qu'il soit de type local, éloigné, ou mixte. Un concentrateur est constitué d'une unité d'accès ASC à la liaison multiplex reliant le concentrateur à l'unité de commande multiservice, et de m unités terminales UT1 à UTm reliées chacune d'une part à des lignes d'abonnées LA1 à LAi, et d'autre part à l'unité d'accès ASC.

L'unité d'accès ASC est constituée de n interfaces asynchrones IA1 à IAn ; le nombre n de ces interfaces varie en fonction du dimensionnement du concentrateur : nombre d'abonnés, type d'abonnés, trafic, etc... Le nombre d'interfaces asynchrones est au minimum de 2 pour des raisons de sécurité et de permanence des services. Chaque interface est contrôlée par un microprocesseur mP.

Chaque interface IA1 à IAn est par exemple un multiplexeur/démultiplexeur, ou une matrice de commutation temporelle asynchrone assurant les deux sens des communications. Chaque interface IA1 à IAn est reliée à une ligne multiplex bidirectionnelle LM1 à LMn, respectivement, les n lignes multiplex LM1 à LMn constituant la liaison multiplex reliant le concentrateur à l'unité de commande multiservice UCB ; comme indiqué précédemment cette liaison multiplex est en fibres optiques lorsque le concentrateur est distant de l'unité de commande, et dans ce cas chaque interface IA1 à IAn comporte deux composants optoélectroniques, non représentés, reliés à la ligne multiplex bidirectionnelle, LM1 à LMn, respectivement, pour assurer la conversion optique électrique et électrique optique des signaux ; chaque interface est également reliée à chacune des m unités terminales UT1 à UTm.

Une unité terminale UT est constituée d'une matrice M de commutation temporelle asynchrone ayant i entrées et n sorties, avec n inférieur ou égal à i, et de i circuits d'accès d'abonné CAB reliés chacun à une ligne d'abonné. Chacune des entrées de la matrice est reliée à un circuit d'accès d'abonné CAB. Le nombre n de sorties de la matrice est au minimum de 2, chaque sortie étant reliée à une interface IA1 à IAn. La matrice M assure les deux sens des communications et est contrôlée par un microprocesseur mP. Chaque circuit d'accès d'abonné CAB est constitué d'une interface de ligne d'abonné IL et d'une interface de commutation temporelle asynchrone ICA.

L'interface de commutation temporelle asynchrone ICA est reliée d'une part à une entrée de la matrice de commutation M et d'autre part à un bus B d'un microprocesseur mP1 chargé du contrôle et de la gestion des circuits d'accès d'abonnés CAB de l'unité terminale.

La composition de l'interface de ligne d'abonné IL est différente selon que la ligne d'abonné est une ligne métallique pour abonné analogique, pour abonné numérique, 2B + D ou TTA, ou encore une fibre optique pour abonné TTA.

Pour une ligne analogique l'interface de ligne d'abonné IL comprend, de manière connue, un circuit d'interface assurant les fonctions BORSCHT et un convertisseur analogique/numérique et numérique/analogique assurant les fonctions de codage, décodage et filtrage.

Pour une ligne numérique à 144 Kbit/s, du type 2B + D, l'interface de ligne d'abonné IL est soit un circuit à annulation d'écho, tel que décrit par exemple dans Commutation et Transmission, n° 4, 1988 p. 67 à 83, Equipements de Transmission RNIS à 144 kbit/s de "Deuxième Génération" pour réseau de distribution, de F. MARCEL, M. WAJIH, et R. CADORET, et dans la Revue des Télécommunications, Vol. 61, n° 1, 1987, p 63 à 71, Composants RNIS pour lignes numériques publiques et privées, de P. VAN ISEGHEM, J.M DANNEELS, M.C. RAHIER, A. KRÜGER et K. SZECHENYL, soit un circuit à l'alternat tel que décrit dans l'article de Commutation et Transmission n° 4, 1988/p. 67 à 83 cité ci-dessus.

Pour une ligne numérique TTA, métallique, dont le débit, qui est fonction des caractéristiques de ladite ligne, est par exemple de l'ordre de 160 kbit/s, l'interface de ligne IL est également soit un circuit à annulation d'écho, soit un circuit à l'alternat.

Pour une ligne fibre optique TTA l'interface de ligne d'abonné comprend deux composants optoélectroniques assurant l'un la conversion optique électrique et l'autre la conversion électrique optique des signaux, des circuits d'amplification d'émission et de réception, et des circuits de codage et de décodage des signaux. Dans le cas d'une ligne à deux fibres optiques, une pour chaque sens de transmission, l'une des fibres optiques est reliée au composant optoélectronique de réception et l'autre fibre optique est reliée au composant optoélectronique d'émission ; dans le cas d'une ligne à une seule fibre optique pour les deux sens de transmission, l'interface de ligne d'abonné comprend un duplexeur optique relié d'une part à la fibre optique de la ligne et d'autre part aux composants optoélectroniques d'émission et de réception par une fibre d'émission et une fibre de réception.

L'interface de commutation ICA comprend, quel que soit le type d'interface de ligne d'abonné IL, des circuits d'émission et d'extraction de cellules de signalisation pour le traitement d'appel, et pour l'exploitation et la maintenance entre le microprocesseur mP1 contrôlant tous les circuits d'accès d'abonné CAB d'une unité terminale UT et l'unité de commande multiservice UCB ainsi que l'installation terminale d'abonné, chez l'abonné. De plus dans le cas des abonnés analogiques et des abonnés numériques 2B + D où l'information n'est pas sous forme de cellules temporelles asynchrones, l'interface de commutation ICA effectue également la cellulisation, et l'opération inverse, la décellulisation, et ceci aussi bien pour les messages de signalisation que pour l'information (parole, image, données), des canaux 2B + D et celle sortant du convertisseur analogique/numérique de l'interface de ligne IL des abonnés analogiques.

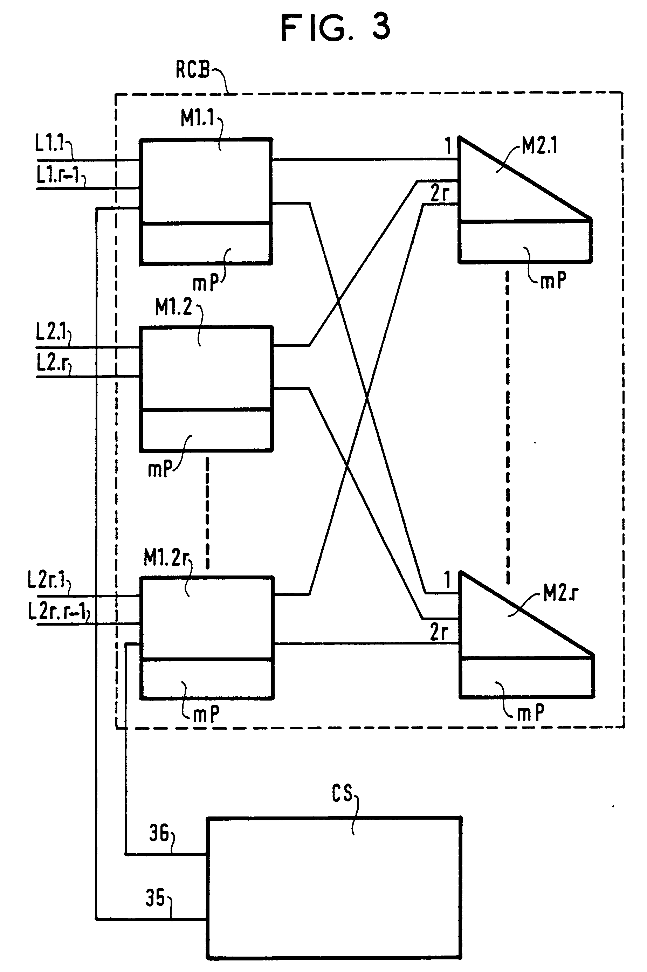

La figure 3 représente l'architecture générale de l'unité de commande multiservice UCB qui comprend une station de commande CS et un réseau de connexion multiservice RCB.

La station de commande CS est constituée de processeurs et de leurs périphériques tels que mémoires,..., nécessaires pour assurer les fonctions de traitement d'appel, d'exploitation et de maintenance d'un centre satellite multiservice. Les processeurs et leurs périphériques ont les redondances suffisantes et bien connues pour assurer la permanence de service avec la qualité requise par les normes internationales.

Le réseau de connexion multiservice RCB est constitué de deux étages de matrices temporelles asynchrone. Les matrices du premier étage ont r entrées et r sorties bidirectionnelles et sont au nombre de 2r, M1.1, M1.2,... M1.2r. Les matrices du deuxième étage sont des matrices à un seul côté constituées des mêmes matrices que celles du premier étage, mais repliées de manière à constituer des matrices de 2r entrées/sorties. Les matrices du deuxième étage sont au nombre de r, m2.1 à m2.r, et chaque matrice est reliée aux 2r matrices M1.1 à M1.2r du premier étage par 2r liaisons multiplex bidirectionnelles.

Chaque matrice du premier étage et du deuxième étage est contrôlée par un microprocesseur mP.

La station de commande CS est reliée par deux liaisons multiplex 35 et 36 à deux matrices du premier étage ; dans la figure 3 la liaison multiplex 35 est reliée à la matrice M1.1 et la liaison multiplex 36 est reliée à la matrice M1.2r, à titre d'exemple.

Chaque matrice du premier étage est reliée par ses r entrées bidirectionnelles à r lignes multiplex ; les matrices du premier étage sont reliées aux lignes multiplex bidirectionnelles L1.1 à L1.r, L2.1 à L2.r,... L2r.1 à L2r.r. Ces lignes multiplex bidirectionnelles constituent les liaisons multiplex 21 à 31, figure 1, qui relient l'unité de commande multiservice UCB aux différents concentrateurs, ainsi que la liaison multiplex 32 reliant l'unité de commande multiservice UCB, donc le centre satellite numérique multiservice CSB, à un central de télécommunications. Dans la figure 2, qui représente l'architecture générale d'un concentrateur, les lignes multiplex bidirectionnelles LM1 à LMn constituent une liaison multiplex reliant ledit concentrateur à l'unité de commande multiservice UCB représentée figure 3 ; ces lignes multiplex bidirectionnelles LM1 à LMn correspondent à n lignes multiplex bidirectionnelles parmi les lignes multiplex bidirectionnelle L1.1 à L1.r, L2.1 à L2.r,... L2r.1 à L2r.r, de la figure 3.

Les lignes multiplex bidirectionnelles constituant la liaison multiplex 32 et les liaisons multiplex 25, 26, 27, 28 et 30 avec les concentrateurs de type éloigné sont en fibres optiques, les lignes multiplex bidirectionnelles 21 à 24, 29 et 31 étant soit métalliques soit en fibres optiques selon que les concentrateurs de type local, ou de type convertisseur, soit ou non à proximité immédiate de l'unité de commande multiservice UCB, comme indiqué précédemment. Dans le réseau de connexion RCB chacune de ces lignes bidirectionnelles en fibres optiques est reliée à une matrice du premier étage par deux composants optoélectroniques, non représentés, assurant la conversion optique électrique et électrique optique des signaux. Lorsqu'une ligne bidirectionnelle est constituée par deux fibres optiques, une pour chaque sens de transmission, l'une des fibre est reliée dans l'interface 1A de l'unité d'accès ASC au composant optélectronique d'émission et dans le réseau de connexion RCB au composant optoélectronique de réception, et l'autre fibre optique est reliée dans l'interface 1A au composant optoélectronique de réception et dans le réseau de connexion au composant optoélectronique d'émission ; dans le cas d'une ligne bidirectionnelle de la liaison multiplex 32 l'une de fibres est reliée dans le réseau de connexion au composant optoélectronique d'émission et dans le central de rattachement à un composant optoélectronique de réception l'autre fibre optique étant reliée dans le réseau de connexion au composant optoélectronique de réception et dans le central de rattachement à un composant optoélectronique d'émission.

Lorsqu'une ligne multiplex bidirectionnelle est constituée par une seule fibre optique pour les deux sens de transmission elle est reliée à chaque extrémité à un duplexeur optique lui-même relié par une fibre optique au composant optoélectronique d'émission et par une autre fibre optique au composant optoélectronique de réception.

L'échange de messages entre la station de commande CS et chacun des microprocesseurs mP et mP1 du centre satellite numérique multiservice, microprocesseurs qui sont chargés du contrôle des différentes matrices et des circuits d'accès d'abonnés des unités terminales, se fait par un protocole utilisant le format des cellules temporelles asynchrones échangées sur les lignes multiplex entre les circuits d'accès d'abonnés CAB et les matrices des unités terminales, entre les matrices des unités terminales et celles de l'unité d'accès ASC, et entre les matrices de l'unité d'accès ASC et celle du réseau central de connexion multiservice RCB. Ainsi la station de commande CS est reliée au réseau de connexion central RCB par les deux lignes multiplex 35 et 36, qui sont reliées à deux matrices différentes du premier étage pour des raisons de sécurité.

## Revendications

1. Centre satellite numérique multiservice en technique temporelle asynchrone de raccordement d'abonnés analogiques et numériques, comportant une unité de commande numérique (UCB) et des concentrateurs numériques (CB) d'au moins un des types suivants : local, éloigné, éloigné mixte, pour le raccordement des abonnés par des lignes métalliques, l'unité de commande étant reliée par des liaisons multiplex (21, ..., 32) aux concentrateurs et à un central numérique de rattachement, caractérisé par le fait que lesdites liaisons multiplex (21, ..., 32) sont des liaisons multiplex asynchrones acheminant des cellules, que les concentrateurs (CB) sont des concentrateurs multiservice délivrant sous forme de cellules des informations reçues des abonnés et transmettant aux abonnés des informations des cellules qu'ils reçoivent, et que l'unité de commande numérique (UCB) est une unité de commande multiservice comprenant un réseau de connexion multiservice (RCB) pour la commutation des cellules, relié aux concentrateurs multiservice (CB) et au central numérique de rattachement par lesdites liaisons multiplex asynchrones (21, ..., 32) et une station de commande (CS) reliée au réseau de connexion multiservice (RCB) par des liaisons multiplex asynchrones de commande (35, 36) acheminant des cellules.

2. Centre satellite selon la revendication 1, caractérisé par le fait qu'il comporte également des concentrateurs multiservice d'au moins un des types suivants : local (CBLNA) pour abonnés numériques en technique temporelle asynchrone et liaison métallique, local (CBLOA) pour abonnés numériques en technique temporelle asynchrone et liaison par fibre optique, éloigné (CBENA) pour abonnés numériques en technique temporelle asynchrone et liaison métallique, éloigné (CBEOA) pour abonnés numériques en technique temporelle asynchrone et liaison par fibre optique, et local mixte (CBEM) pour abonnés analogiques, numériques et numériques en technique temporelle asynchrone avec liaison métallique et par fibre optique.

3. Centre satellite selon la revendication 1, caractérisé par le fait qu'un concentrateur multiservice de type éloigné mixte (CBEM) est relié à des abonnés analogiques, numériques et numériques en technique temporelle asynchrone avec liaison métallique et par fibre optique.

4. Centre satellite selon l'une des revendications 1, 2 et 3, caractérisé par le fait qu'un concentrateur multiservice comporte des unités terminales (UT1 à UTm) et une unité d'accès (ASC), qu'une unité terminale comporte des circuits d'accès d'abonnés (CAB) constitués chacun par une interface de ligne (IL) reliée à un abonné et une interface de commutation temporelle asynchrone (ICA), une matrice de commutation (M) contrôlée par un microprocesseur de matrice (mP) et reliée aux interfaces de commutation temporelle asynchrone (ICA), et un microprocesseur (mP1) relié à chaque interface de commutation temporelle asynchrone (ICA) qui assure l'émission et l'extraction de cellules relatives à des signaux de signalisation en provenance ou à destination dudit microprocesseur, et que l'unité d'accès (ASC) comporte des interfaces asynchrones (IA1 à I1An) chacune contrôlée par un microprocesseur (mP) et reliée d'une part au réseau de connexion multiservice (RCB) par une ligne multiplex asynchrone (LM1) et d'autre part à chaque matrice de commutation (M) des unités terminales (UT1 à UTm) par une ligne multiplex asynchrone.

5. Centre satellite selon la revendication 1, caractérisé par le fait qu'il comporte également au moins un convertisseur synchrone/asynchrone et asynchrone synchrone (CAS) relié d'une part à une liaison multiplex synchrone et d'autre part au réseau de connexion multiservice (RCB) par une liaison multiplex asynchrone.

6. Centre satellite selon l'une des revendications 4 et 5 caractérisé par le fait que le réseau de connexion multiservice (RCB) est constitué par un premier étage de matrices (M1.1 à M1.2r) et un deuxième étage de matrices (m2,1 à m2.r), que chaque matrice des premier et deuxième étages comporte un microprocesseur de commande (mP), et que les matrices du premier étage sont reliées à des lignes multiplex asynchrones pour relier ledit premier étage aux unités d'accès (ASC) des unités terminales des concentrateurs multiservice, aux convertisseurs (CAS), au central numérique de rattachement, et à la station de commande (CS) laquelle est reliée à deux matrices à raison d'une ligne multiplex (35, 36) par matrice.

## Patentansprüche

1. Im asynchronen Zeitmultiplex betriebene digitale Mehrdienste-Satellitenvermittlungszentrale zum Anschließen von analogen und digitalen Teilnehmergeräten, mit einer digitalen Steuereinheit (UCB) und mit digitalen Konzentratoren (CB) mindestens eines der nachfolgenden Typen: lokal, entfernt, gemischt entfernt, für den Anschluß der Teilnehmer durch metallische Leitungen, wobei die Steuereinheit über Multiplexverbindungen (21, ..., 32) an die Konzentratoren und an eine digitale Vermittlungszentrale angeschlossen ist, dadurch gekennzeichnet, daß die Multiplexverbindungen (21, ..., 32) asynchrone Multiplexverbindungen sind, die Zellen übertragen, daß die Konzentratoren (CB) Mehrdienstekonzentratoren sind, die von Teilnehmern in Form von Zellen empfangene Informationen liefern und empfangene Informationen der Zellen an die Teilnehmer übermitteln, und daß die digitale Steuereinheit (UCB) eine Mehrdienste-Steuereinheit ist, die ein Mehrdienste-Vermittlungsnetz (RCB) für die Durchschaltung der Zellen, das an die Mehrdienste-Konzentratoren (CB) und an die digitale Vermittlungszentrale über asynchrone Multiplexverbindungen (21, ..., 32) angeschlossen ist, und eine Steuerstation (CS) aufweist, die an das Mehrdienste-Vermittlungsnetz (RCB) über asynchrone Multiplexsteuerverbindungen (35, 36) angeschlossen ist, die die Zellen übertragen.

2. Satellitenvermittlungszentrale nach Anspruch 1, dadurch gekennzeichnet, daß sie weiter Mehrdienste-Konzentratoren mindestens eines der nachfolgenden Typen umfaßt: lokal (CBLNA) für digitale Teilnehmergeräte im asynchronen Zeitmultiplex über Metalleitungen, lokal (CBLOA) für digitale Teilnehmergeräte im asynchronen Zeitmultiplex und über Lichtleitfasern, entfernt (CBENA) für digitale Teilnehmergeräte im asynchronen Zeitmultiplex und über Metalleitungen, entfernt (CBEOA) für digitale Teilnehmergeräte im asynchronen Zeitmultiplex über Lichtleitfasern, und lokal gemischt (CBEM) für analoge, digitale Teilnehmergeräte und Geräte mit asynchronem Zeitmultiplexbetrieb und Anschlüssen über Metalleitungen und über Lichtleitfasern.

3. Satellitenvermittlungszentrale nach Anspruch 1, dadurch gekennzeichnet, daß ein Mehrdienste-Konzentrator des Typs entfernt gemischt (CBEM) an analoge Teilnehmergeräte, digitale Teilnehmergeräte und digitale Teilnehmergeräte im asynchronen Zeitmultiplex über Metalleitungen und über Lichtleitfaser angeschlossen ist.

4. Satellitenvermittlungszentrale nach einem der Ansprüche 1, 2 und 3, dadurch gekennzeichnet, daß ein Mehrdienste-Konzentrator Endeinheiten (UT1 bis Utm) und eine Zugriffseinheit (ASC) aufweist, daß eine Endeinheit Teilnehmerzugriffsschaltungen (CAB) aufweist, die je aus einer mit einem Teilnehmergerät verbundenen Leitungsschnittstelle (IL) und einer asynchronen Zeitmultiplex-Durchschaltschnittstelle (IC), einer Schaltmatrix (M), die von einem Matrixmikroprozessor (mP) gesteuert und an die asynchronen Zeitmultiplex-Durchschaltschnittstellen (ICA) angeschlossen ist, und einem Mikroprozessor (mP1) bestehen, der an jede asynchrone Zeitmultiplex-Durchschaltschnittstelle (ICA) angeschlossen ist, die die Aussendung und Entnahme von Zellen in Bezug auf Signalisationssignale bewirkt, deren Ursprung oder Bestimmung der Mikroprozessor ist, und daß die Zugriffseinheit (ASC) asynchrone Schnittstellen (IA1 bis IAn) aufweist, die durch einen Mikroprozessor (Mp) gesteuert werden und einerseits über eine asynchrone Multiplexleitung (LM1) an das Mehrdienste-Vermittlungsnetz (RCB) und andererseits durch eine asynchrone Multiplexleitung an jede Durchschaltmatrix (M) der Endeinheiten (UT1 bis Utm) angeschlossen sind.

5. Satellitenvermittlungszentrale nach Anspruch 1, dadurch gekennzeichnet, daß sie weiter mindestens einen Synchron/Asynchron- und Asynchron/Synchron-Umsetzer (GAS) aufweist, der einerseits an eine synchrone Multiplexverbindung, und andererseits an das Mehrdienste-Vermittlungsnetz (RCB) über eine asynchrone Multiplexverbindung angeschlossen ist.

6. Satellitenvermittlungszentrale nach Anspruch 4 oder 5, dadurch gekennzeichnet, daß das Mehrdienste-Vermittlungsnetz (RCB) aus einer ersten Matrixstufe (M1.1 bis M1.2r) und einer zweiten Matrixstufe (M2.1 bis M2.r) besteht, daß jede Matrix der ersten oder der zweiten Stufe einen Steuermikroprozessor (mP) aufweist, und daß die Matrizen der ersten Stufe an asynchrone Multiplexleitungen zum Verbinden der ersten Stufe mit den Zugriffseinheiten (ASC) der Endeinheiten der Mehrdienste-Konzentratoren, an die Umsetzer (GAS), an die digitale Vermittlungszentrale und an die Steuerstation (CS) angeschlossen sind, die an zwei Matrizen angeschlossen ist, und zwar jeweils über eine Multiplexleitung (35, 36) je Matrix.

## Claims

1. An asynchronous time division multiservice digital satellite center for connecting analog and digital subscribers, the center comprising a digital control unit (UCB) and digital concentrators (CB) of at least one of the following types: local, distant, and versatile distant for connecting subscribers over metal wire lines, with the control unit being connected by multiplex links (21,...,32) to the concentrators and to a parent digital exchange, the satellite center being characterized in that the said multiplex links (21,...,32) are asynchronous multiplex links conveying cells, in that the concentrators (CB) are multiservice concentrators delivering information received from subscribers in the form of a cells and transmitting information to subscribers taken from the cells they receive, and in that the digital control unit (UCB) is a multiservice control unit comprising a multiservice switching network (RCB) for switching the cells, and connected to the multiservice concentrators (CB) and to the parent digital exchange via said asynchronous multiplex links (21,...,32), and a control station (CS) connected to the multiservice switching network (RCB) by controlling asynchronous multiplex links (35,36) conveying cells.

2. A satellite center according to claim 1, characterized in that it also includes multiservice concentrators of at least one of the following types: local (CBLNA) for metal wire connected asynchronous time division digital subscribers; local (CBLOA) for optical fiber connected asynchronous time division digital subscribers; distant (CBENA) for metal wire connected asynchronous time division digital subscribers; distant (CBEOA) for optical fiber connected asynchronous time division digital subscribers, and versatile local (CBEM) for optical fiber connected and metal wire connected asynchronous time division digital, synchronous digital, other digital, and analog subscribers.

3. A satellite center according to claim 1, characterized in that a versatile distant multiservice concentrator (CBEM) is connected to asynchronous time division digital subscribers, to other digital subscribers, and to analog subscribers both over metal wires and over optical fibers.

4. A satellite center according to any one of claims 1, 2, and 3, characterized in that a multiservice concentrator comprises a plurality of terminal units (UT1 to UTm) and an access unit (ASC); in that a terminal unit includes: subscriber access circuits (CAB) each constituted by an asynchronous time division switching interface (ICA) and by a line interface (IL) connected to a subscriber; a switching matrix (M) controlled by a microprocessor (mP) for the matrix and connected to the asynchronous time division switching interfaces (ICA); and a microprocessor (mP1) connected to each asynchronous time division switching interface (ICA) for transmitting and extracting cells relating to signalling signals coming from or going to said microprocessor; and in that the access unit (ASC) includes asynchronous interfaces (IA1 to IA1n) each controlled by a respective microprocessor (mP) and connected firstly to the multiservice switching network (RCB) via an asynchronous multiplex line (LM1) and secondly to each switching matrix (M) of the terminal unit (UT1 to UTm) via respective asynchronous multiplex lines.

5. A satellite center according to claim 1, characterized in that it also includes at least one synchronous-to-asynchronous and asynchronous-to-synchronous converter (CAS) connected firstly to a synchronous multiplex link and secondly to the multiservice switching network (RCB) via an asynchronous multiplex link.

6. A satellite center according to claim 4 or 5, characterized in that the multiservice switching network (RCB) is constituted by a first stage of matrices (M1.1 to M1.2r) and by a second stage of matrices (M2.1 to M2.r), in that each matrix of the first and second stages includes a controlling microprocessor (mP), and in that the matrices of the first stage are connected to asynchronous multiplex lines in order to connect said first stage to the access units (ASC) of the terminal units of the multiservice concentrators, to the converters (CS), to the parent digital exchange, and to the control station (CS) which is connected to two of the matrices by one multiplex line (35, 36) per matrix.
